# EUROPÄISCHE PATENTSCHRIFT

(11) **EP 1 940 892 B1**
(45) Veröffentlichungstag und Bekanntmachung des Hinweises auf die Patenterteilung: **01.07.2009**
(21) Anmeldenummer: 06806459.1
(22) Anmeldetag: 23.10.2006
(51) Int. Cl.: C08F 220/06, C09D 133/06, C09D 5/03

(54) **VON ORGANISCHEN LÖSEMITTELN IM WESENTLICHEN ODER VÖLLIG FREIE, STRUKTURVISKOSE, HÄRTBARE, WÄSSRIGE PULVERDISPERSIONEN, VERFAHREN ZU IHRER HERSTELLUNG UND IHRE VERWENDUNG**
STRUCTURALLY VISCOUS, CURABLE, AQUEOUS POWDER DISPERSIONS THAT ARE SUBSTANTIALLY OR ENTIRELY DEVOID OF ORGANIC SOLVENTS, METHOD FOR PRODUCING THEM AND THEIR USE
DISPERSIONS AQUEUSES SOUS FORME DE POUDRE, A VISCOSITE INTRINSEQUE, EXEMPTES OU PARTIELLEMENT EXEMPTES DE SOLVANTS ORGANIQUES, DURCISSABLES, PROCEDES DE PRODUCTION ET D'UTILISATION ASSOCIES

(30) Priorität: 24.10.2005 DE 102005050823
(43) Veröffentlichungstag der Anmeldung: 09.07.2008
(73) Patentinhaber: BASF Coatings AG, 48165 Münster (DE)
(72) Erfinder: TECKLENBORG, Michael, 48317 Drensteinfurt (DE); GIESEN, Bianca, 59065 Hamm (DE); DEYDA, Marco, 59075 Hamm (DE); BAUMGART, Hubert, 48163 Münster (DE); RÖCKRATH, Ulrike, 48308 Senden (DE); AUSSMANN, Corinna, 59075 Hamm (DE); WOLTERING, Joachim, 48159 Münster (DE)
(74) Vertreter: Leifert & Steffan
(86) Internationale Anmeldenummer: PCT/EP2006/010182
(87) Internationale Veröffentlichungsnummer: WO 2007/048553

(56) Entgegenhaltungen:
- EP-A1- 0 363 723
- WO-A-90/03229

## Beschreibung

Die vorliegende Erfindung betrifft von organischen Lösemitteln im Wesentlichen oder völlig freie, strukturviskose, härtbare, wässrige Pulverdispersionen. Außerdem betrifft die vorliegende Erfindung ein Verfahren zur Herstellung von organischen Lösemitteln im Wesentlichen oder völlig freien, strukturviskosen, härtbaren, wässrigen Pulverdispersionen. Außerdem betrifft die vorliegende Erfindung die Verwendung der von organischen Lösemitteln im Wesentlichen oder völlig freien, strukturviskosen, härtbaren, wässrigen Pulverdispersionen und der nach dem Verfahren hergestellten, von organischen Lösemitteln Im Wesentlichen oder völlig freien, strukturviskosen, härtbaren, wässrigen Pulverdispersionen.

### Stand der Technik

Von organischen Lösemitteln im Wesentlichen oder völlig freie, strukturviskose, härtbare, wässrige Pulverdispersionen, insbesondere Puiveriackdispersionen, werden von der Fachwelt bekanntermaßen auch als »Pulverslurries« oder kurz als »Slurries« bezeichnet. Enthalten die Slurries keine opaken Bestandteile, werden als auch als »Klarlackslurries« bezeichnet.

Aus der deutschen Patentanmeldung DE 38 32 826 A1 ist die wässrige Sekundärdispersion eines (Meth)Acrylatcopolymerisats mit einer Glasübergangstemperatur von -40 bis +60°C, einer OH-Zahl von 40 bis 200 mg KOH/g und einer Säurezahl von 20 bis 100 mg KOH/g bekannt. Das bekannte (Meth)Acrylatcopolymarisat wird nach einem zweistufigen Copolymerisationsverfahren hergestellt, bei dem man in der ersten Stufe carboxylgruppenfreie Monomere (co)polymerisiert und in der zweiten Stufe carboxylgruppenhaltige Monomere (co)polymerisiert. Anschließend werden die (Meth)Acrylatcopolymerisate neutralisiert und in Wasser dispergiert. Die resultierenden Dispersionen weisen durch die Laserlichtstreuung (Messgerät: Malvern® Autosizer 2C) gemessene mittlere Teilchengrößen von 0,06 bis 0,25 µm auf. Sie enthalten noch organische Lösemittel und zeigen kein strukturviskoses Verhalten. Somit sind nicht als Klariackslurries im Sinne der vorliegenden Erfindung anzusehen.

Die bekannten Sekundärdispersionen werden zur Herstellung von wässrigen Klarlacken verwendet. Die hieraus hergestellten Klarlackierungen haben ein sehr gutes Aussehen (guter Verlauf, hoher Glanz, guter Decklackstand, gute Abbildungsunterscheidbarkeit), eine gute Haftung auf Basislackierungen und eine gute Schwitzwasserbeständigkeit im Konstantklima-Test.

Klariackslurries sind aus der deutschen Patentanmeldung DE 100 27 212 A1 bekannt.

Die bekannte Klarlackslurry enthält als Additiv eine wässrige, sekundäre (Meth)Acrylatdispersion in einer Menge von 0,01 bis 7 Gew.-%, bezogen auf die Gesamtmenge des filmbildenden Festkörpers der Klarlackslurry und der sekundären (Meth)Acrylatdispersion. Die verwendeten (Meth)Acrylatcopolymerisate haben ein zahlenmittleres Molekulargewicht von 1.000 bis 30.000 Dalton, eine OH-Zahl von 40 bis 200 mg KOH/ g und eine Säurezahl von 5 bis 150 mg KOH/g und werden beispielsweise nach dem in der deutschen Patentanmeldung DE 199 04 317 A1 beschriebenen zweistufigen Copolymerisationsverfahren in organischer Lösung hergestellt und anschließend in Wasser dispergiert.

Die bekannte Klarlackslurry ist rühr- und viskositätsstabil, so dass sich bei ihrer Lagerung und Handhabung keine feinteiligen, dimensionsstabilen Bestandteile unter Serumbildung absetzen. Sie liefert Klarlackierungen eines vorzüglichen optischen Gesamteindrucks (Appearance) und einer hohen Kratzfestigkeit, Chemikalienbeständigkeit und Witterungsbeständigkeit.

Grundsätzlich müssen Klarlackslurries vor ihrer Applikation filtriert werden. Es ist deshalb essenziell, dass sie eine gute Filtrierbarkeit aufweisen. In den Anlagen der Anwender, insbesondere in den Linien der Automobilhersteller, werden die Klariackslurries durch Zahnradpumpen gefördert. Durch diese Belastung kann aber die Filtrierbarkeit signifikant verschlechtert werden. Durch die schlechtere Filtrierbarkeit der belasteten Klariackslurries resultieren aber Klarlackierungen mit verschlechterten optischen Eigenschaften (Appearance).

Hier bietet die Zugabe von speziellen externen Emulgatoren oder Netzmitteln eine Problemlösung.

So ist aus der deutschen Patentanmeldung DE 101 35 998 A1 eine Klariackslurry bekannt, die als Bindemittel ein (Meth)Acrylatcopolymerisat in einer Menge von, bezogen auf den filmbildenden Festkörper der Klariackslurry, bis zu 100 Gew.-%, beispielsweise 60,5 Gew.-%, enthalten kann. Das (Meth)Acrylatcopolymerisat wird durch ein einstufiges Copolymerisationsverfahren In organischer Lösung hergestellt. Als Emulgatoren oder Netzmittel werden alkoxyierte Fettalkohole mit 16 bis 18 Kohlenstoffatomen im Alkylrest und im statistischen Mittel mindestens 20 Oxaalkandiyl-Gruppen Im Molekül verwendet,

Indes ist es nach wie vor wünschenswert, gegebenenfalls ohne solche externen Emulgatoren oder Netzmittel auszukommen, weil hierbei grundsätzlich die Gefahr besteht, dass sie die Filtrierbarkeit zwar verbessert, die Zahnradpumpengängigkeit und das strukturviskose Verhalten der Klariackslurries sowie die Chemikalienbeständigkeit der hieraus hergestellten Klariackierungen aber verschlechtern.

### Aufgabe der Erfindung

Aufgabe der vorliegenden Erfindung ist es, von organischen Lösemitteln freie, strukturviskose, härtbare, wässrige Pulverdispersionen oder Slurries, insbesondere Pulveriackdispersionen, speziell Klariackslurries, bereitzustellen, die gegebenenfalls auch ohne die Zugabe von externen Emulgatoren oder Netzmitteln eine sehr gute Zahnradpumpangängigkeit und Filtrierbarkeit aufweisen. Dabei sollen sie auch noch rühr- und viskositätsstabil sein, so dass sich bei ihrer Lagerung und Handhabung keine feinteiligen, dimensionseinbllen Bestandteile unter Serumbildung absetzen, Nicht zuletzt sollen sie ein hervorragendes Applikationsverhalten zeigen.

Des Weiteren sollen sie sich mit besonderem Vorteil für die Herstellung thermoplastischer und duroplastischer Materiallen, Insbesondere als Beschichtungsstoffe, Klebstoffe und Dichtungsmassen sowie als Vorstufen für Formteile und Folien für die Herstellung von Beschichtungen, Klebschichten und Dichtungen sowie Formteilen und Fellen, eignen.

Die resultierenden thermoplastischen und duroplastischen Materiallen, Insbesondere die Beschichtungen, Klebschichten, Dichtungsmassen sowie Formteile und Folien, sollen hervorragende anwendungstechnische Eigenschaften haben.

Insbesondere sollen sich die Beschichtungsstoffe hervorragend als Klariackslurries für die Herstellung von Klarlacklerungen, insbesondere Klariackierungen von farb- und/oder effektgebenden Mehrschichtiackierungen, eignen.

Die Kleriackierungen sollen harvorragende optischen Eigenschaften (Appearance) sowie eine hervorragende Kratzfestigkeit, Chemikalienstabilität, Witterungsbeständigkeit, Schwitzwasserbeständigkeit und Vorgilbungsbeständigkeit aufweisen. Sie sollen frei sein von Lackstörungen, wie Nasen, Stippen, Krater, Nadelstiche, Mikrostörungen (Sternenhimmel), Pickel und Trübungen, sein.

### Die erfindungsgemäße Lösung

Demgemäß wurden die von organischen Lösemitteln im Wesentlichen oder völlig freien, strukturviskosen, härtbaren, wässrigen Pulverdispersionen gefunden, enthaltend in einem wässrigen Medium (B) als disperse Phase feste und/oder hochviskose, unter Lagerungs- und Anwendungsbedingungen dimensionsstabile Partikel (A) mit einer mit der Laserbeugungsmethode gemessenen mittleren Partikelgröße von D (v, 0.5) = 1 bis 10 µm, wobei die dimensionsstabilen Partikel (A) als Bindemittel 10 bis 100 Gew.-% mindestens eines (Meth)Acrylatcopolymerisats (A1) mit einer OH-Zahl von 40 bis 250 mg KOH/g und einer Säurezahl von 5 bis 100 mg KOH/g enthalten und wobei das (Meth)Acrylatcopolymerisat (A1) durch mehrstufige Copolymerisation
(a11) mindestens eines mindestens eine Hydroxylgruppe enthaltenden Acrylat- und/oder Methacrylatmonomeren und
(a12) mindestens eines mindestens eine Säuregruppe enthaltenden, olefinisch ungesättigten Monomeren

in organischer Lösung hergestellt worden ist, wobei
(1) in mindestens einer Stufe
   (1.1) die Gesamtmenge oder der überwiegende Anteil des oder der eingesetzten Monomeren (a11) oder
   (1.2) die Gesamtmenge oder der überwiegende Anteil des oder der eingesetzten Monomeren (a11) mit einem geringen Anteil des oder der eingesetzten Monomeren (a12)
      nahezu vollständig oder vollständig (co)polymerisiert worden ist, bevor
(2) in mindestens einer weiteren Stufe
   (2.1) die Gesamtmenge oder der überwiegende Anteil des oder der eingesetzten Monomeren (a12) oder
   (2.2) die Gesamtmenge oder der überwiegende Anteil des oder der eingesetzten Monomeren (a12) mit der Restmenge des oder der eingesetzten Monomeren (a11) (co)polymerisiert worden ist,

im Folgenden werden die von organischen Lösemitteln im Wesentlichen oder völlig freien, strukturviskosen, härtbaren, wässrigen Puiverdisparsionen als »erfindungsgemäße Slurries« bezeichnet.

Außerdem wurde das Verfahren zur Herstellung der erfindungsgemäßen Slurries gefunden, bei dem man die dimensionsstabilen Partikel (A) in einem wässrigen Medium (B) dispergiert.

Im Folgenden wird das Verfahren zur Herstellung der erfindungsgemäße Slurries als »erfindungsgemäßes Verfahren« bezeichnet.

Nicht zuletzt wurde die Verwendung der erfindungsgemäße Slurries und der nach dem erfindungsgemäßen Verfahren hergestellten Slurries für die Herstellung thermopiastischer und duroplastischer Materiallen gefunden.

Weitere Erfindungsgegenstände geben aus der Beschreibung hervor.

Weitere Ausfühmngsformen der Erfindung finden sich In den Ansprüchen 2 - 25.

### Vorteile der Erfindung

Im Hinblick auf den Stand der Technik war es überraschend und für den Fachmann nicht vorhersehbar, dass die Aufgabe, die der vorliegenden Erfindung zugrunde lag, mit Hilfe der erfindungsgemäße Slurries, des erfindungsgemäßen Verfahrens und der erfindungsgemäßen Verwendung gelöst werden konnte.

Insbesondere war es überraschend, dass die erfindungsgemäßen Slurries - sofern notwendig - auch ohne die Zugabe von externen Emulgatoren oder Netzmitteln eine sehr gute Zahnradpumpengängigkeit und Filtrierbarkeit aufwiesen. Dabei waren sie auch noch rühr- und viskositätsstabil, so dass sich bei ihrer Lagerung und Handhabung keine feinteiligen, dimensionsstabilen Bestandteile unter Serumbildung absetzten. Nicht zuletzt zeigten sie ein hervorragendes Applikationsverhalten.

Des Weiteren eigneten sie sich hervorragend für die Herstellung thermoplastischer und duroplastischer Materialien, insbesondere als Beschichtungsstoffe, Klebstoffe und Dichtungen sowie als Vorstufen für Formteile und Folien für die Herstellung von Beschichtungen, Klebschichten und Dichtungen sowie von Formtellen und Follen.

Die resultierenden erfindungsgemäßen thermoplastischen und duroplastischen Materialien, Insbesondere die erfindungsgemäßen Beschichtungen, Klebschichten, Dichtungsmassen sowie Formteile und Folien, hatten hervorragende anwendungstechnische Eigenschaften.

Insbesondere eigneten sich die erfindungsgemäßen Beschichtungsstoffe hervorragend als Klariackslurries für die Herstellung von Klartackierungen, Insbesondere Klariacklerungen von farb- und/oder effektgebenden Mehrschichtlackierungen.

Die erfindungsgemäßen Klariackierungen wiesen hervorragende optischen Eigenschaften (Appearance) sowie eine hervorragende Kratzfestigkeit, Chemikallenstabilität, Witterungsbaständigkeit, Schwitzwasserbeständigkeit und Verglibungsbeständigkeit auf. Sie waren frei sein von Lackstörungen, wie Nasen, Stippen, Krater, Nadelstiche, Mikrostörungen (Sternenhimmel), Pickel und Trübungen.

### Ausführliche Beschreibung der Erfindung

Die erfindungsgemäße Slurry enthält als disperse Phase feste und/oder hochviskose, dimensionsstabile Partikel (A).

»Dimensionsstabil« bedeutet, dass die Partikel (A) unter den üblichen und bekannten Bedingungen der Lagerung und der Anwendung von strukturviskosen, wässrigen Pulverdispersionen oder Slurries, wenn überhaupt, nur geringfügig agglomerieren und/oder in kleinere Teilchen zerfallen, sondern auch unter dem Einfluss von Scherkräften ihre ursprüngliche Form ganz oder im Wesentlichen bewahren.

Die Partikel (A) haben eine mit der Laserbeugungsmethode gemessene mittlere Partikelgröße von D (v, 0,5) = 1 bis 10 µm, vorzugsweise 1 bis 5 µm, bevorzugt 1 bis 3 µm und insbesondere 1,5 bis 2,5 µm.

Vorzugsweise liegt die maximale Partikelgröße bei 30, bevorzugt 20, besonders bevorzugt 10 und insbesondere 5 µm.

Vorzugsweise weisen die dimensionsstabilen Partikel (A) eine mit der Laserbeugungsmethode gemessene monomodale Partikelgrößenverteilung:
- D (v, 0,1) = 0,8 bis 1,2 µm, vorzugsweise 0,9 bis 1,1 µm und insbesondere 0,95 bis 1,1 µm;
- D (v, 0,5) = 1,5 bis 2,5 µm, vorzugsweise 1,6 bis 2,4 µm und insbesondere 1,7 bis 2,3 µm;
- D (v, 0,9) = 2,5 bis 3,6 µm, vorzugsweise 2,6 bis 3,5 µm und insbesondere 2,7 bis 3,5 µm und
- Span = {[D (v, 0,9)] - [D (v, 0,1)]}/[D (v, 0,5)] = 0,8 bis 1,5, vorzugsweise 0,9 bis 1,4 und insbesondere 0,95 bis 1,3
auf.

Die Laserbeugungsmethode ist eine übliche und bekannte Methode zur Messung von Partikelgrößen und ihrer Verteilung und kann beispielsweise mit Hilfe des Mastersizer® der Firma Malvern Instruments durchgeführt werden.

Die Partikelgrößenverteilung kann in beliebiger Weise eingestellt werden, beispielsweise durch mechanische Zerkleinerung der dimensionsstabilen Partikel (A). Vorzugsweise resultiert die Partikelgrößenverteilung auf Grund des Gehalts der Partikel (A) an anionischen Gruppen, bevorzugt in Kombination mit ihrer mechanischen Zerkleinerung.

Der Gehalt der erfindungsgemäßen Slurry an Partikeln (A) kann sehr breit variieren und richtet sich nach den Erfordernissen des Einzelfalls.

Vorzugsweise liegt der Gehalt bei 5 bis 70, bevorzugt 10 bis 60, besonders bevorzugt 15 bis 50 und insbesondere 15 bis 40 Gew.-%, bezogen auf die erfindungsgemäße Slurry.

Die erfindungsgemäße Slurriy ist im Wesentlichen oder völlig frei von organischen Lösemitteln.

»Im Wesentlichen frei« bedeutet, dass die betreffende erfindungsgemäße Slurry einen Lösemittelgehalt < 3 Gew.-%, vorzugsweise < 1 Gew.-% und insbesondere < 0,1 Gew.-%, hat.

»Völlig frei von « bedeutet, dass der Lösemittelgehalt jeweils unter den üblichen und bekannten Nachweisgrenzen für organische Lösemittel liegt.

Die erfindungsgemäße Slurry ist strukturviskos.

Das als "strukturviskos" bezeichnete Viskositätsverhalten beschreibt einen Zustand, der einerseits den Bedürfnissen der Applikation und andererseits auch den Erfordernissen hinsichtlich Lager- und Absetzstabilität der erfindungsgemäßen Slurry Rechnung trägt: Im bewegten Zustand, wie beispielsweise beim Umpumpen der erfindungsgemäße Slurry in der Ringleitung einer Beschichtungsanlage und beim Applizieren, nimmt die erfindungsgemäße Slurry einen niederviskosen Zustand ein, der eine gute Verarbeitbarkeit gewährleistet. Ohne Scherbeanspruchung hingegen steigt die Viskosität an und gewährleistet auf diese Weise, dass die bereits auf dem zu beschichtenden Substrat befindliche erfindungsgemäße Slurry eine verringerte Neigung zum Ablaufen an senkrechten Flächen zeigt ("Läuferbildung"). In gleicher Weise führt die höhere Viskosität im unbewegten Zustand, wie etwa bei der Lagerung, dazu, dass ein Absetzen der festen Partikel (A) größtenteils verhindert wird oder ein Wiederaufrühren der während der Lagerzeit nur schwach abgesetzten und/oder agglomerierten erfindungsgemäßen Slurry gewährleistet ist.

Vorzugsweise wird das strukturviskose Verhalten mit Hilfe geeigneter Verdicker (A2), insbesondere nicht ionischer und ionischer Verdicker (A2), eingestellt, die vorzugsweise in der wässrigen Phase (B) vorliegen.

Bevorzugt wird für das strukturviskose Verhalten ein Viskositätsbereich von 50 bis 1.500 mPas bei einer Scherrate von 1.000 s⁻¹ und von 150 bis 8.000 mPas bei einer Scherrate von 10 s⁻¹ sowie von 180 bis 12.000 mPas bei einer Scherrate von 1 s⁻¹ eingestellt.

Die erfindungsgemäße Slurry ist härtbar.

Dabei kann die erfindungsgemäße Slurry physikalisch, thermisch und/oder mit aktinischer Strahlung härtbar sein. Vorzugsweise ist die erfindungsgemäße Slurry mit aktinischer Strahlung, thermisch oder thermisch und mit aktinischer Strahlung (Dual Cure) härtbar. Bevorzugt ist die erfindungsgemäße Slurry thermisch oder thermisch und mit aktinischer Strahlung härtbar; insbesondere ist sie thermisch härtbar. Dabei kann die physikalische Härtung die anderen Härtungsmechanismen unterstützen.

Im Rahmen der vorliegenden Erfindung bedeutet der Begriff "physikalische Härtung" die Härtung einer Schicht aus einem Beschichtungsstoff durch Verfilmung durch Lösemittelabgabe aus dem Beschichtungsstoff, wobei die Verknüpfung innerhalb der Beschichtung über Schlaufenbildung der Polymermoleküle der Bindemittel (zu dem Begriff vgl. Römpp Lexikon Lacke und Druckfarben, Georg Thieme Verlag, Stuttgart, New York, 1998, »Bindemittel«, Seiten 73 und 74) erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, »Härtung«, Seiten 274 und 275).

Die thermische Härtung kann über die sgenannten Selbstvernetzung von Bestandteilen der erfindungsgemäßen Slurry erfolgen.

Zur Einstellung dieser Eigenschaft enthält oder enthalten die erfindungsgemäße Slurry, bevorzugt ihre Partikel (A), insbesondere das (Meth)Acrylatcopolymerisat (A1), komplementäre reaktive funktionelle Gruppen, die mit den vorhandenen Hydroxylgruppen und/oder hiervon verschiedenen komplementären reaktiven funktionellen Gruppen thermisch initiierte und aufrechterhaltene Reaktionen eingehen, und/oder autoreaktive funktionelle Gruppen, die "mit sich selbst" reagieren können.

Die thermische Härtung kann aber auch über die so genannte Fremdvernetzung von Bestandteilen der erfindungsgemäßen Slurry erfolgen.

Zur Einstellung dieser Eigenschaft enthält oder enthalten die erfindungsgemäße Slurry, bevorzugt ihre Partikel (A), insbesondere das (Meth)Acrylatcopolymerisat (A1), noch mindestens ein Vernetzungsmittel (A2) für die thermische Härtung, das komplementäre reaktive funktionelle Gruppen enthält, die mit den in dem (Meth)Acrylatcopolymerisat (A1) vorhandenen Hydroxylgruppen und/oder mit den gegebenenfalls vorhandenen hiervon verschiedenen komplementären reaktiven funktionellen Gruppen thermisch initiierte und aufrechterhaltene Reaktionen eingehen können.

Beispiele geeigneter komplementärer reaktiver funktioneller Gruppen und autoreaktiver funktioneller Gruppen sind aus der deutschen Patentanmeldung DE 100 27 292 A1, Seite 6, Absatz [0062], bis Seite 8, Absatz [0067], bekannt.

Beispiele geeigneter Vernetzungsmittel (A2) sind aus der deutschen Patentanmeldung DE 100 27 292 A1, Seite 11, Absätze [0094] bis [0096], bekannt. Insbesondere werden blockierte Polyisocyanate verwendet, wie sie beispielsweise in der deutschen Patentanmeldung DE 100 40 223 A1, Seite 3, Absatz [0012], bis Seite 4, Absatz [0035], beschrieben werden.

Um mit aktinischer Strahlung härtbar zu sein, enthält die erfindungsgemäße Slurry mit aktinischer Strahlung aktivierbare Bindungen, die bei Bestrahlen reaktiv werden und mit andern aktivierten Bindungen ihrer Art Polymerisationsreaktionen und/oder Vernetzungsreaktionen eingehen können, die nach radikalischen und/oder ionischen Mechanismen ablaufen.

Beispiele geeigneter, mit aktinischer Strahlung aktivierbarer Bindungen und funktioneller Gruppen, die sie enthalten, sind aus der deutschen Patentanmeldung DE 100 27 292 A1, Seite 9, Absatz [0076], bis Seite 10, Absatz [0082], bekannt. Diese funktionellen Gruppen können in den (Meth)Acrylatcopolymerisaten (A1) und/oder in mit aktinischer Strahlung härtbaren Zusatzstoffen (A2), wie sie beispielsweise aus der deutschen Patentanmeldung DE 100 27 292 A1, Seite 10, Absatz [0088], und Seite 12, Zeilen 2 bis 4, bekannt sind, vorhanden sein. Vorzugsweise sind sie in den Zusatzstoffen (A2) enthalten.

Unter aktinischer Strahlung ist hier und im Folgenden elektromagnetische Strahlung, wie nahes Infrarot (NIR), sichtbares Licht, UV-Strahlung, Röntgenstrahlung oder Gammastrahlung, insbesondere UV-Strahlung, oder Korpuskularstrahlung, wie Elektronenstrahlung, Betastrahlung, Alphastrahlung, Protonenstrahlung oder Neutronenstrahlung, insbesondere Elektronenstrahlung, zu verstehen.

Die Partikel (A) der erfindungsgemäßen Slurry enthalten, jeweils bezogen auf ihre Gesamtmenge, 10 bis 100 Gew.-%, vorzugsweise 20 bis 100 Gew.-% und insbesondere 30 bis 100 Gew.-% mindestens eines, insbesondere eines, Bindemittels (A1).

Das Bindemittel (A1) ist ein (Meth)Acrylatcopolymerisat mit einer OH-Zahl von 40 bis 250 mg KOH/g, vorzugsweise 50 bis 200 mg KOH/g und insbesondere 60 bis 180 mg KOH/g und einer Säurezahl von 5 bis 100 mg KOH/g, vorzugsweise 5 bis 60 mg KOH/g und insbesondere 5 bis 40 mg KOH/g.

Vorzugsweise hat das (Meth)Acrylatcopolymerisat (A1) ein zahlenmittleres Molekulargewicht von 1.000 bis 50.000 Dalton, bevorzugt 1.500 bis 40.000 und insbesondere 2.000 bis 20.000 Dalton. Vorzugsweise liegt die Uneinheitlichkeit des Molekulargewichts bei 1 bis 10, bevorzugt 1,2 bis 8 und insbesondere 1,5 bis 5.

Das (Meth)Acrylatcopolymerisat (A1) wird durch die mehrstufige, insbesondere zweistufige, Copolymerisation in organischer Lösung hergestellt. Die Copolymerisation kann nach einem radikalischen, kationischen oder anionischen Mechanismus ablaufen. Insbesondere handelt es sich um die thermisch initiierte radikalische Copolymerisation.

Vorzugsweise werden dabei organische, vorzugsweise wassermischbare, Lösemittel verwendet. Bevorzugt haben diese einen hohen Dampfdruck, so dass sie bei der Herstellung der erfindungsgemäßen Slurry problemlos bei niedrigen Temperaturen, vorzugsweise durch Destillation, insbesondere azeotrope Destillation, entfernt werden können. Beispiele geeigneter organischer Lösemittel sind Ethoxyethylpropionat, Isopropoxypropanol, Isopropanol, Aceton, Methylethylketon oder Methylisobutylketon.

Vorzugsweise werden für die thermische Initiierung die üblichen und bekannten Radikalstarter verwendet. Beispiele geeigneter Radikalstarter sind aus den deutschen Patentanmeldungen DE 100 27 292 A1, Seite 12, Zeilen 13 bis 15, oder DE 199 04 317 A1, Seite 6, Zeilen 59 bis 62, bekannt.

Erfindungsgemäß werden bei der mehrstufige Copolymerisation
(a11) mindestens ein, insbesondere ein, mindestens eine, insbesondere eine, Hydroxylgruppe enthaltendes Acrylat- und/oder Methacrylatmonomer und
(a12) mindestens ein, insbesondere ein, mindestens eine, insbesondere eine, Säuregruppe enthaltendes, olefinisch ungesättigtes Monomer copolymerisiert.

Vorzugsweise wird das Monomer (a11) aus der Gruppe, bestehend aus Hydroxyalkyl- und Hydroxycycloalkylester der Acrylsäure und Methacrylsäure und Umsetzungsprodukten aus Acrylsäure und Methacrylsäure mit dem Glycidylester einer in alpha-Stellung verzweigten Monocarbonsäure mit 5 bis 18 Kohlenstoffatomen in Molekül, ausgewählt

Beispiele geeigneter Monomere (a11) sind aus den deutschen Patentanmeldungen DE 100 27 292 A1, Seite 8, Absatz [0070], DE 199 30 067 A1, Seite 4, Zeilen 43 bis 60, DE 19 04 317 A1, Seite 4, Zeilen 54, bis Seite 5, Zeilen 5, oder DE 38 32 826 A1, Zeilen 12 bis 24, bekannt.

Vorzugsweise wird die Säuregruppe des Monomeren (a12) aus der Gruppe, bestehend aus Carboxylgruppen, Sulfonsäuregruppen, Phosphonsäuregruppen, sauren Phosphorsäureestergruppen und sauren Sulfatestergruppen, ausgewählt. Insbesondere sind die Säuregruppen Carboxylgruppen.

Vorzugsweise wird das Monomer (a12) aus der Gruppe, bestehend aus Acrylsäure, Methacrylsäure, Ethacrylsäure, Crotonsäure, Maleinsäure, Fumarsäure, Itaconsäure, olefinisch ungesättigten aromatischen Carbonsäuren, olefinisch ungesättigten Estern von Polycarbonsäuren, olefinisch ungesättigten Sulfonsäuren, olefinisch ungesättigten Phosphonsäuren, olefinisch ungesättigten, sauren Phosphorsäureestern sowie olefinisch ungesättigten, sauren Schwefelsäureestern, ausgewählt.

Vorzugsweise werden die olefinisch ungesättigten Gruppen in den Monomeren (a12), so weit es sich nicht um Methacrylsäure, Ethacrylsäure, Crotonsäure, Maleinsäure, Fumarsäure oder Itaconsäure handelt, aus der Gruppe, bestehend aus Vinylether-, Vinylester-, Dicyclopentadienyl-, Norbornenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen, ausgewählt.

Beispiele geeigneter Monomere (a12) sind aus den deutschen Patentanmeldungen DE 100 27 292 A1, Seite 9, Zeilen 27 bis 34, DE 199 04 317 A1, Seite 5, Zeilen 6 bis 13, DE 199 30 067 A1, Seite 5, Zeilen 23 bis 25, oder DE 38 32 826 A1, Seite 3, Zeilen 56 bis 63, bekannt.

In einer ersten Variante der mindestens einen, insbesondere einen, Stufe (1) der mehrstufigen, insbesondere zweistufigen, Copolymerisation wird die Gesamtmenge oder der überwiegende Anteil der jeweils eingesetzten Monomeren (a11) (co)polymerisiert. Unter einem überwiegenden Anteil sind mehr als 50%, bevorzugt mehr als 55% und insbesondere mehr als 60% der jeweils eingesetzten Monomeren (a11) zu verstehen.

In einer zweiten Variante der mindestens einen, insbesondere einen Stufe (1) der mehrstufigen, insbesondere zweistufigen, Copolymerisation wird die Gesamtmenge oder der überwiegende Anteil der jeweils eingesetzten Monomeren (a11) mit einem geringen Anteil der jeweils eingesetzten Monomeren (a12) copolymerisiert. Unter einem geringen Anteil sind höchstens 20%, bevorzugt höchstens 10% und insbesondere höchstens 5% der jeweils eingesetzten Monomeren (a12) zu verstehen.

Unabhängig davon, ob die erste oder die zweite Variante der Stufe (1) der mehrstufigen Copolymerisation angewandt wird, kann dabei noch mindestens ein von den Monomeren (a11) und (a12) verschiedenes, olefinisch ungesättigtes Monomer (a13) copolymerisiert werden.

Vorzugsweise wird das Monomer (a13) aus der Gruppe, bestehend aus Alkyl-, Cycloalkyl- und Arylestern olefinisch ungesättigter Säuren, Vinylgruppen enthaltenden Verbindungen, Allylgruppen enthaltenden Verbindungen und Nitrilen, die mit mindestens einer Gruppe, ausgewählt aus der Gruppe, bestehend aus inerten funktionellen Gruppen und reaktiven funktionellen Gruppen, substituiert sein können, ausgewählt.

Beispiele geeigneter Monomere (a13) sind aus den deutschen Patentanmeldungen DE 100 27 292 A1, Seite 3, Absatz [0026], bis Seite 5, Absatz [0036], oder DE 199 30 067 A1, Seite 4, Zeile 28, bis Seite 5, Zeile 45, bekannt.

Unabhängig davon, ob die erste oder die zweiten Variante der Stufe (1) der mehrstufigen Copolymerisation angewandt wird, werden die Monomeren (a11) sowie gegebenenfalls die Monomeren (a12) und/oder (a13) nahezu vollständig oder vollständig (co)polymerisiert, bevor mindestens eine weitere, insbesondere eine zweite, Stufe (2) durchgeführt wird. »Nahezu vollständig« ist die (Co)Polymerisation bei einem Umsatz > 50%, bevorzugt > 60%, besonders bevorzugt > 70% und insbesondere > 80%, jeweils bezogen auf die eingesetzten Monomere. »Vollständig« ist die (Co)Polymerisation, wenn der Gehalt an Restmonomeren < 2%, bevorzugt < 1%, ist.

Methodisch gesehen bietet die Herstellung des (Meth)Acrylatcopolymerisats (A1) keine Besonderheiten, sondern kann, wie in den deutschen Patentanmeldungen DE 100 27 292 A1, Seite 3, Absatz [0022], und Seite 5, Absätze [0039] und [0049], DE 199 04 317 A1, Seite 6, Zeile 55, bis Seite 8, Zeile 4, oder DE 38 32 826 A1, Seite 3, Zeile 4, bis Seite 4, Zeile 35, beschrieben, durchgeführt werden.

Die erfindungsgemäße Slurry besteht aus mindestens einer dispersen Phase (A) und einer kontinuierlichen wässrigen Phase (B). Im einfachsten Fall besteht die disperse Phase (A) aus dem Bindemittel (A1) und die kontinuierlichen Phase (B) aus Wasser. Vorzugsweise enthält aber die erfindungsgemäße Slurry noch mindestens einen üblichen und bekannten Zusatzstoff (A2) in üblichen und bekannten Mengen.

Je nach seinen physikalisch chemischen Eigenschaften kann ein Zusatzstoff (A2) in der dispersen Phase (A), d. h. den dimensionsstabilen Partikeln (A), vorliegen; er kann aber auch eine separate disperse Phase (A2) bilden, wie beispielsweise ein Pigment. Außerdem kann er ausschließlich in der wässrigen Phase (B) vorliegen, wie beispielsweise ein wasserlösliches Salz. Nicht zuletzt kann sich der Zusatzstoff (A2) zwischen der dispersen Phase (A) und der wässrigen Phase (B) verteilen, wie beispielsweise ein molekulardispers gelöster organischer Farbstoff. Der Fachmann vermag daher aufgrund seines allgemeinen Fachwissens vorherzusagen, wie sich ein Zusatzstoff (A2) in der erfindungsgemäßen Slurry verhalten wird.

Bevorzugt wird der Zusatzstoff (A2) aus der Gruppe, bestehend aus rückstandsfrei oder im Wesentlichen rückstandsfrei thermisch zersetzbaren Salzen; von den Bindemitteln (A1) verschiedenen physikalisch, thermisch und/oder mit aktinischer Strahlung härtbaren Bindemitteln; Vernetzungsmitteln für die thermische Härtung; Neutralisationsmitteln; thermisch härtbaren Reaktivverdünnern; mit aktinischer Strahlung härtbaren Reaktivverdünnern; opaken und transparenten, farb- und/oder effektgebenden Pigmenten; molekulardispers löslichen Farbstoffen; opaken und transparenten Füllstoffen; Nanopartikeln; Lichtschutzmitteln; Antioxidantien; Entlüftungsmitteln; Slipadditiven; Polymerisationsinhibitoren; Initiatoren der radikalischen Polymerisation, insbesondere Photoinitiatoren; thermolabilen radikalischen Initiatoren; Haftvermittlern; Verlaufmitteln; filmbildenden Hilfsmitteln; Rheologiehilfsmitteln, wie Verdicker und strukturviskose Sag control agents (SCA); Netzmitteln und Emulgatoren; Flammschutzmitteln; Korrosionsinhibitoren; Rielselhilfen; Wachsen; Sikkativen; Bioziden und Mattierungsmitteln; ausgewählt.

Bevorzugt enthält die erfindungsgemäße Slurry Vernetzungsmittel, Lichtschutzmittel, Verlaufmittel und Rheologiehilfsmittel als Zusatzstoffe (A2).

Vorzugsweise enthält die erfindungsgemäße Slurry, wenn sie als Klarlack-Slurry eingesetzt werden soll, keine opaken Bestandteile, insbesondere keine opaken Pigmente und Füllstoffe.

Beispiele geeigneter Zusatzstoffe (A2) sind aus den deutschen Patentanmeldungen
- DE 101 26 649 A1, Seite 16, Absatz [0145], bis Seite 18, Absatz [0189],
- DE 100 27 270 A1, Seite 11, Absätze [0106] und [0107],
- DE 101 35 997 A1, Seite 3, Absatz [0022], bis Seite 4, Absatz [0033], und Seite 4, Absätze [0039] und [0040], Seite 10, Absätze [0092] bis [0101], oder
- DE 100 27 292 A1, Seite 11, Absatz [0098], bis Seite 12, Absatz [0099],
bekannt.

Die erfindungsgemäße Slurry wird vorzugsweise durch das aus den deutschen Patentanmeldungen DE 198 41 842 A1, DE 199 08 013 A1, DE 100 01 442 A1, DE 140 223 A1 oder DE 100 55 464 A1 oder dem deutschen Patent DE 198 41 842 C2 bekannte Sekundärdispersionsverfahren hergestellt.

Bei diesem Verfahren werden die ionisch stabilisierbaren Bindemittel (A1) sowie gegebenenfalls die Zusatzstoffe (A2) in organischen Lösemitteln, insbesondere leicht flüchtigen, wassermischbaren Lösemitteln, gelöst. Die resultierenden Lösungen werden mit Hilfe von Neutralisationmitteln (A2) in Wasser dispergiert. Sodann wird mit Wasser unter Rühren verdünnt. Es bildet sich zunächst eine Wasser-in-Öl-Emulsion aus, die bei weiterer Verdünnung in eine Öl-in-Wasser-Emulsion umschlägt. Dieser Punkt wird im Allgemeinen bei Festkörpergehalten von < 50 Gew.-%, bezogen auf die Emulsion, erreicht und ist äußerlich an einem stärkeren Abfall der Viskosität während der Verdünnung erkennbar.

Die Öl-in-Wasser-Emulsion kann auch direkt durch die Schmelzeemulgierung der Bindemittel (A1) sowie gegebenenfalls der Zusatzstoffe (A2) in Wasser hergestellt werden.

Die so erhaltene, noch lösemittelhaltige Emulsion wird anschließend durch azeotrope Destillation von Lösemitteln befreit.

Erfindungsgemäß ist es von Vorteil, wenn die zu entfernenden Lösemittel bei einer Destillationstemperatur unterhalb 70°C, bevorzugt unterhalb 50°C und insbesondere unterhalb 40°C abdestilliert werden. Gegebenenfalls wird der Destillationsdruck hierbei so gewählt, dass bei höher siedenden Lösemitteln dieser Temperaturbereich eingehalten wird.

Im einfachsten Fall kann die azeotrope Destillation dadurch bewerkstelligt werden, dass man die Emulsion bei Raumtemperatur im offenen Gefäß während mehrerer Tage rührt. Im bevorzugten Fall wird die Iösemittelhaltige Emulsion durch Vakuumdestillation von den Lösemitteln befreit.

Die abgedunstete oder abdestillierte Menge an Wasser und Lösemitteln werden zur Vermeidung von hohen Viskositäten durch Wasser ersetzt. Die Zugabe des Wassers kann vorher, nachher oder auch während des Abdunstens oder der Destillation durch portionsweise Zugabe erfolgen.

Nach Verlust der Lösemittel steigt die Glasübergangstemperatur der dispergierten dimensionsstabilen Partikel an, und es bildet sich anstelle der bisherigen lösemittelhaltigen Emulsion eine wässrige Dispersion.

Vorzugsweise wird dieser Dispersion zur Einstellung des strukturviskosen Verhaltens mindestens ein Rheologiehilfsmittel (A2) zugesetzt, sodass die erfindungsgemäße Slurry resultiert.

Gegebenenfalls werden die dimensionsstabilen Partikel (A) im nassen Zustand noch mechanisch zerkleinert, was auch als Nassvermahlung bezeichnet wird. Vorzugsweise werden hierbei Bedingungen angewandt, dass die Temperatur des Mahlguts 70, bevorzugt 60 und insbesondere 50°C nicht überschreitet. Vorzugsweise beträgt der spezifische Energieeintrag während des Mahlprozesses 10 bis 1.000, bevorzugt 15 bis 750 und insbesondere 20 bis 500 Wh/g.

Für die Nassvermahlung können die unterschiedlichsten Vorrichtungen angewandt werden, die hohe oder niedrige Scherfelder erzeugen.

Beispiele geeigneter Vorrichtungen, die niedrige Scherfelder erzeugen, sind übliche und bekannte Rührkessel, Spalthomogenisatoren, Microfluidizer oder Dissolver.

Beispiele geeigneter Vorrichtungen, die hohe Scherfelder erzeugen, sind übliche und bekannte Rührwerksmühlen oder Inline-Dissolver.

Besonders bevorzugt werden die Vorrichtungen, die hohe Scherfelder erzeugen, angewandt. Von diesen sind die Rührwerksmühlen erfindungsgemäß besonders vorteilhaft und werden deshalb ganz besonders bevorzugt verwendet.

Generell wird bei der Nassvermahlung die erfindungsgemäße Slurry mit Hilfe geeigneter Vorrichtungen, wie Pumpen, insbesondere Zahnradpumpen, den vorstehend beschriebenen Vorrichtungen zugeführt und im Kreis hierüber gefahren, bis die gewünschte Teilchengröße erreicht ist.

Vorzugsweise wird die erfindungsgemäße Slurry vor ihrer Verwendung filtriert. Hierfür werden die üblichen und bekannten Filtrationsvorrichtungen und Filter verwendet. Die Maschenweite der Filter kann breit variieren und richtet sich in erster Linie nach der Teilchengröße und der Teilchengrößenverteilung der Partikel (A). Der Fachmann kann daher die geeigneten Filter leicht anhand dieses physikalischen Parameters ermitteln. Beispiele geeigneter Filter sind Monofilament-Flächenfilter oder -Beutelfilter. Diese sind am Markt unter den Marken Pong® oder Cuno® erhältlich.

Die erfindungsgemäße Slurry lässt sich in hervorragender Weise mit Hilfe der üblichen und bekannten Methoden der Applikation flüssiger Beschichtungsstoffe, wie z.B. Spritzen, Sprühen, Rakeln, Streichen, Gießen, Tauchen, Träufeln oder Walzen, applizieren. Vorzugsweise werden Spritzapplikationsmethoden angewandt. Falls notwendig wird dabei aktinische Strahlung ausgeschlossen.

Nach ihrer Applikation trocknet die erfindungsgemäße Slurry problemlos auf und zeigt bei der Verarbeitungstemperatur, in der Regel bei Raumtemperatur, ein Verfilzen. D.h., die als Nassschicht applizierte erfindungsgemäße Slurry lüftet bei Raumtemperatur oder leicht erhöhten Temperaturen unter Wasserabgabe ab, wobei die darin enthaltenen Partikel (A) ihre ursprüngliche Form verändern, zusammenfließen und einen homogenen film (A) bilden. Die applizierte erfindungsgemäße Slurry kann aber auch pulverförmig auftrocknen.

Die Trocknung kann durch die Verwendung eines gasförmigen, flüssigen und/oder festen, heißen Mediums, wie heiße Luft, erhitztes Öl oder erhitzte Walzen, oder von Mikrowellenstrahlung, Infrarotlicht und/oder nahem Infrarotlicht (NIR), beschleunigt werden. Vorzugsweise wird die Nassschicht in einem Umluftofen bei 23 bis 150°C, bevorzugt 30 bis 120°C und insbesondere 50 bis 100°C getrocknet.

Anschließend wird die getrocknete erfindungsgemäße Schicht (A) physikalisch, thermisch, mit aktinischer Strahlung oder mit Dual-Cure, bevorzugt thermisch oder mit Dual Cure, insbesondere thermisch, gehärtet.

Vorzugsweise werden bei der thermischen Härtung die vorstehend beschriebenen Vorrichtungen und Verfahren verwendet. In manchen Fällen kann es von Vorteil sein, den Verlaufprozess und die Härtungs- oder Vernetzungsreaktion mit einem zeitlichen Versatz ablaufen zu lassen, indem ein Stufenheizprogramm oder eine so genannte Aufheizrampe gefahren wird. Vorzugsweise liegt die Vernetzungstemperatur zwischen 120 und 160°C. Die entsprechende Einbrennzeit liegt zwischen 10 und 60 Minuten.

Methodisch gesehen, weist die Härtung mit aktinischer Strahlung keine Besonderheiten auf, sondern kann mit Hilfe der üblichen und bekannten Vorrichtungen und Verfahren, wie sie beispielsweise in der deutschen Patentanmeldung DE 198 18 735 A1, Spalte 10, Zeilen 31 bis 61, der deutschen Patentanmeldung DE 102 02 565 A1, Seite 9, Absatz [0092], bis Seite 10, Absatz [0106], der deutschen Patentanmeldung DE 103 16 890 A1, Seite 17, Absätze [0128] bis [0130], in der internationalen Patentanmeldung WO 94/11123, Seite 2, Zeile 35, bis Seite 3, Zeile 6, Seite 3, Zeilen 10 bis 15, und Seite 8, Zeilen 1 bis 14, oder dem amerikanischen Patent US 6,743,466 B2, Spalte 6, Zeile 53, bis Spalte 7, Zeile 14, beschrieben werden, durchgeführt werden.

Wegen der vorteilhaften Eigenschaften der erfindungsgemäße Slurry und der hieraus hergestellten erfindungsgemäßen thermoplastischen und duroplastischen Materialien, können die erfindungsgemäßen Slurries und die erfindungsgemäßen Materialien außerordentlich breit angewandt werden. Vorzugsweise werden sie als Beschichtungsstoffe, Klebstoffe und Dichtungsmassen oder Vorstufen für Formteile und Folien zur Herstellung von erfindungsgemäßen Beschichtungen, Klebschichten und Dichtungen sowie Formteilen und Folien verwendet.

Die erfindungsgemäßen Beschichtungen, Klebschichten und Dichtungen können dem Beschichten, Verkleben und dem Abdichten der unterschiedlichsten beschichteten und unbeschichteten Substrate dienen.

Vorzugsweise bestehen die Substrate aus Metallen, Kunststoffen, Holz, Keramik, Stein, Textil, Faserverbunden, Leder, Glas, Glasfasern, Glas- und Steinwolle, mineral- und harzgebundenen Baustoffen, wie Gips- und Zementplatten oder Dachziegel, sowie Verbunden dieser Materialien.

Bevorzugt handelt es sich bei den Substraten um
- mit Muskelkraft, Heißluft oder Wind betriebenen Fortbewegungsmittel zu Lande, zu Wasser oder zur Luft, wie Fahrräder, Draisinen, Ruderboote, Segelboote, Heißluftballons, Gasballons oder Segelflugzeuge, sowie Teilen hiervon
- mit Motorkraft betriebenen Fortbewegungsmittel zu Lande, zu Wasser oder zur Luft, wie Motorräder, Nutzfahrzeuge oder Kraftfahrzeuge, insbesondere PKW, Über- oder Unterwasserschiffe oder Flugzeuge, sowie Teile hiervon,
- stationären Schwimmkörper, wie Bojen oder Teilen von Hafenanlagen
- Bauwerke im Innen- und Außenbereich,
- Türen, Fenstern und Möbel und
- Glashohlkörper,
- industrielle Kleinteile, wie Schrauben, Mutter, Radkappen oder Felgen,
- Behälter, wie Coils, Container oder Emballagen,
- elektrotechnische Bauteile, wie elektronische Wickelgüter, beispielsweise Spulen,
- optische Bauteile,
- mechanische Bauteile und
- weiße Ware, wie Haushaltsgeräte, Heizkessel und Radiatoren.

Insbesondere handelt es sich bei den Substraten um PKW-Karosserien und Teilen hiervon.

Bevorzugt wird die erfindungsgemäße Slurry zur Herstellung der erfindungsgemäßen Beschichtungen verwendet.

Dabei kann die erfindungsgemäße Slurry mit besonderem Vorteil als Primer, Grundierung, Füller, Basislack, Unidecklack und Klarlack zur Herstellung ein- oder mehrschichtiger Primer-Lackierungen, Korrosionsschutzschichten, Steinschlagschutzgrundierungen, Füllerlackierungen, Basislackierungen, Unidecklackierungen und Klarlackierungen verwendet werden.

Mit ganz besonderem Vorteil wird die erfindungsgemäße Slurry für die Herstellung von Klarlackierungen im Rahmen von farb- und/oder Mehrschichtlackierungen verwendet. die insbesondere nach den üblichen und bekannten Nass-in-nass-Verfahren (vgl. die deutsche Patentanmeldung DE 100 27 292 A1, Seite 13, Absatz [0109], bis Seite 14, Absatz [0118]) aus Basislacken und der erfindungsgemäßen Slurry hergestellt werden.

Wegen ihrer besonderen Vorteile sind die erfindungsgemäße Slurry und die hieraus hergestellten erfindungsgemäßen Klarlackierungen hervorragend für die Erstlackierung von PKW (OEM), insbesondere Lackierungen von PKW der Oberklasse, geeignet.

Die erfindungsgemäßen farb- und/oder effektgebenden Mehrschichtlackierungen, die mindestens eine erfindungsgemäße Klarlackierung umfassen, erfüllen alle Anforderungen, die an Automobillackierungen gestellt werden (vgl. das europäische Patent EP 0 352 298 B1, Seite 15, Zeile 42, bis Seite 17, Zeile 40) und entsprechen in ihrem Erscheinungsbild (Appearance) einer Class-A-Oberfläche in vollem Umfang. Insbesondere sind sie besonders glatt, auch in hohen Schichtdicken frei von Lackstörungen wie Kratern oder Rissen, witterungsbeständig, chemikalienbeständig, schwitzwasserbeständig, beständig gegenüber Steinschlag, und kratzfest.

### Beispiele und Vergleichsversuche

### Herstellbeispiel 1

### Die Herstellung eines Methacrylatcopolymerisats (A1) nach einem zweistufigen Copolymerisationsverfahren

In einem Reaktionsgefäß, ausgerüstet mit einem Rührer, zwei Zulaufgefäßen, einem Stickstoffeinleitungsrohr, einem Innenthermometer, einem Rückflusskühler und einem Heizmantel, wurden 1.071 Gewichtsteile Methylethylketon vorgelegt und unter Rühren auf 78°C erhitzt. Bei dieser Temperatur wurde aus dem einen Zulaufgefäß eine Monomermischung aus 42 Gewichtsteilen Isobutylmethacrylat, 688 Gewichtsteilen n-Butylmethacrylat und 507 Gewichtsteilen 2-Hydroxyethylmethacrylat während zwei Stunden gleichmäßig zudosiert. Aus dem anderen Zulaufgefäß wurde, gleichzeitig beginnend, eine Lösung von 125 Gewichtsteilen tert.-Butylperethylhexanoat in 69 Gewichtsteilen Methylethylketon während viereinhalb Stunden gleichmäßig zudosiert. Zwei Stunden nach Beginn der Dosierung wurden 15 Gewichtsteile Methacrylsäure zu der Monomermischung hinzu gegeben, wonach die resultierende Mischung homogenisiert und während weiteren zwei Stunden gleichmäßig zum Reaktionsgemisch zudosiert wurde. Nach Beendigung der Initiatordosierung wurde das Reaktionsgemisch weitere zwei Stunden auf 78°C erhitzt und anschließend abgekühlt. Die resultierende Lösung des Methacrylatcopolymerisats (A1) wurde anschließend unter Vakuum auf einen Feststoffgehalt von 70 Gew.-% (Umluftofen eine Stunde/130°C) aufkonzentriert. Die Säurezahl betrug 10 mg KOH/g Festharz und die OH-Zahl 175 mg KOH/g Festharz.

### Herstellbeispiel 2

### Die Herstellung eines Methacrylatcopolymerisats (Vergleich) nach einem einstufigen Copolymerisationsverfahren

In einem Reaktionsgefäß, ausgerüstet mit einem Rührer, zwei Zulaufgefäßen, einem Stickstoffeinleitungsrohr, einem Innenthermometer, einem Rückflusskühler und einem Heizmantel, wurden 1.071 Gewichtsteile Methylethylketon vorgelegt und unter Rühren auf 78°C erhitzt. Bei dieser Temperatur wurde aus dem einen Zulaufgefäß eine Monomermischung aus 42 Gewichtsteilen Isobutylmethacrylat, 688 Gewichtsteilen n-Butylmethacrylat, 507 Gewichtsteilen 2-Hydroxyethylmethacrylat und 15 Gewichtsteilen Methacrylsäure während vier Stunden gleichmäßig zudosiert. Aus dem anderen Zulaufgefäß wurde, gleichzeitig beginnend, eine Lösung von 125 Gewichtsteilen tert.-Butylperethylhexanoat in 69 Gewichtsteilen Methylethylketon während viereinhalb Stunden gleichmäßig zudosiert. Nach Beendigung der Initiatordosierung wurde das Reaktionsgemisch weitere zwei Stunden auf 78°C erhitzt und anschließend abgekühlt. Die resultierende Lösung des Methacrylatcopolymerisats (Vergleich) wurde anschließend unter Vakuum auf einen Feststoffgehalt von 70 Gew.-% (Umluftofen eine Stunde/130°C) aufkonzentriert. Die Säurezahl betrug 10 mg KOH/g Festharz und die OH-Zahl 175 mg KOH/g Festharz.

### Beispiel 1

### Die Herstellung der Klarlackslurry 1 auf der Basis des Methacrylatcopolymerisats (A1) und der Klarlackierungen 1 hieraus

Für die Herstellung der Klarlackslurry 1 wurde die Lösung des Methacrylatcopolymerisats (A1) des Herstellbeispiels 1 verwendet.

Die Herstellung erfolgte analog zu Beispiel 1, »Die Herstellung der erfindungsgemäßen Pulverklarlack-Slurry 1 auf der Basis des Lösungspolyacrylatharzes A gemäß dem Herstellbeispiel 1.1«, Seite 7, Zeilen 1 bis 38, i. V. m. Herstellbeispiel 2, »Die Herstellung eines blockierten Polyisocyanats als Vernetzer«, Seite 6, Zeilen 52 bis 66, der deutschen Patentanmeldung DE 198 41 842 A1, nur dass an Stelle des dort verwendeten Lösungspolyacrylatharzes A das Methacrylatcopolymerisat (A1) verwendet wurde.

Die resultierende Klarlackslurry 1 war ausgesprochen lagerstabil. Selbst nach vierwöchiger Lagerung bei Raumtemperatur zeigte sich kein abgesetzter Bodensatz.

Die Klarlackslurry 1 war ausgesprochen scherstabil, was anhand des Zahnradpumpen-Tests nachgewiesen werden konnte. Dazu wurde eine Laborapparatur verwendet, in der die Klarlackslurry 1 einer Scherbelastung durch Umpumpen im Kreis ausgesetzt wurde. 500 g der Klarlackslurry 1 wurden in einen 1 Liter-Vorratsbehälter eingeführt. Anschließend wurde sie über einen 80 cm langen Kunststoffschlauch mit einem Innendurchmesser von 0,5 cm mit einer Förderleistung von 600 ml/min bei einem Druck von 5 bar fünfmal im Kreis umgepumpt. Die Förderung erfolgte mittels einer Zahnradpumpe (Firma Barmag, 6 ccm).

Die Klarlackslurry 1 blieb auch nach der Scherbelastung sehr gut filtrierbar.

Es wurden mit der unbelasteten Klarlackslurry 1 und der belasteten Klarlackslurry 1 analog zu der in der deutschen Patentanmeldung DE 198 41 842 A1 in den Beispielen 3 und 4, »Die Verwendung der erfindungsgemäßen Pulverklarlack-Slurries 1 (Beispiel 3) und 2 (Beispiel 4) zur Herstellung von Klarlacken«, Seite 8, Zeilen 7 bis 30, angegebenen Vorschrift Mehrschichtlackierungen, umfassend die Klarlackierung 1 (unbelastet) oder die Klarlackierung 1 (belastet), hergestellt.

Beide Klarlackierungen 1 wiesen dieselben hervorragenden anwendungstechnischen Eigenschaften auf. So wiesen sie beide hervorragende optischen Eigenschaften (Appearance) sowie eine hervorragende Kratzfestigkeit, Chemikalienstabilität, Witterungsbeständigkeit, Schwitzwasserbeständigkeit und Vergilbungsbeständigkeit auf. Sie waren frei von Lackstörungen, wie Nasen, Stippen, Krater, Nadelstiche, Mikrostörungen (Sternenhimmel), Pickel und Trübungen.

### Vergleichsversuch V1

### Die Herstellung der Klarlackslurry V1 und von Klarlacklerungen V1 hieraus

Beispiel 1 wurde wiederholt, nur dass an Stelle der Lösung des Methacrylatcopolymerisats (A1) des Herstellbeispiels 1 die Lösung des Methacrylatcopolymerisats (Vergleich) des Herstellbeispiels 2 verwendet wurde.

Die unbelastete Klarlackslurry V1 war lagerstabil. Nach vierwöchiger Lagerung bei Raumtemperatur zeigte sich ein geringer, nur locker abgesetzter Bodensatz, der mit einem einfachen Laborrührer innerhalb fünf Minuten wieder homogen aufgerührt werden konnte.

Nach der Belastung der Klarlackslurry V1 in Zahnradpumpen-Test war die belastete Klarlackslurry V1 nicht so gut filtrierbar wie die belasteten Klarlackslurry 1 des Beispiels 1.

Die aus der Klarlackslurry V1 (belastet) hergestellten Klarlackierungen V1 (belastet) wiesen weniger gute anwendungstechnische Eigenschaften auf als die aus der Klarlackslurry V1 (unbelastet) hergestellten Klarlackierungen V1 (unbelastet); insbesondere zeigten sie Lackstörungen, wie Mikrostörungen (Sternenhimmel) und Pickel.

## Patentansprüche

1. Von organischen Lösemitteln im Wesentlichen oder völlig freie, strukturviskose, härtbare, wässrigen Pulverdispersionen, enthaltend in einem wässrigen Medium (B) als disperse Phase feste und/oder hochviskose unter Lagerung- und Anwendungsbedlngungen dimenslonsstablle Partikel (A) mit einer mit der Laserbeugungsmethode gemessenen mittleren Partikelgröße von D (v, 0,5) = 1 bis 10 µm, wobei die dimenslonestabllen Partikel (A) als Bindermittel 10 bis 100 Gew.-% mindestens eines (Meth)Acrylatcopolymerisats (A1) mit einer OH-Zahl von 40 bis 250 mg KOH/g und einer Säurezahl von 5 bis 100 mg KOH/g enthalten und wobei das (Meth)Acrylatcopolymerlsat (A1) durch mehrstufige Copolymerisation
(a11) mindestens eines mindestens eine Hydroxylgruppe enthaltenden Acrylat- und/oder Methacrylatmonomeren und
(a12) mindestens eines mindestens eine Säuregruppe enthaltenden, olefinisch ungesättigten Monomeren
in organischer Lösung hergestellt worden ist, wobei
(1) In mindestens einer Stufe
(1.1) die Gesamtmenge oder der überwiegende Anteil des oder der eingesetzten Monomeren (a11) oder
(1.2) die Gesamtmenge oder der überwiegende Anteil des oder der eingesetzten Monomeren (a11) mit einem geringen Anteil des oder der eingesetzten Monomeren (a12)
nahezu vollständig oder vollständig (co)polymerisiert worden ist, bevor
(2) in mindestens einer weiteren Stufe
(2.1) die Gesamtmenge oder der überwiegende Anteil des oder der eingesetzten Monomeren (a12) oder
(2.2) die Gesamtmenge oder der überwiegende Anteil des oder der eingesetzten Monomeren (a12) mit der Restmenge des oder der eingesetzten Monomeren (a11) (co)polymerisiert worden ist.

2. Puiverdispersionen nach Anspruch 1, **dadurch gekennzeichnet, dass** die dimensionsstabilen Partikel (A) eine mit der Laserbeugungsmethode gemessene monomodale Partlkelgrößenvertellung:
- D (v, 0,1) = 0,8 bis 1,2 µm;
- D (v, 0,5) = 1,5 bis 2,5 µm;
- D (v, 0,9) = 2,5 bis 3,5 µm und
- Span = {[D (v, 0,9)] - [D (v, 0,1)]}/[D (v, 0,5)] = 0,8 bis 1,5;
haben.

3. Pulverdispersionen nach Anspruch 1 oder 2, **dadurch gekennzeichnet, dass** die dimenslonsstabllen Partikel (A) 20 bis 90 Gew.-% mindestens eines (Meth)Acrylatcopolymerisats (A1) enthalten.

4. Pulverdlspersionen nach einem der Ansprüche 1 bis 3, **dadurch gekennzeichnet, dass** das (Meth)Acrylatcopolymerisat (A1) eine OH-Zahl von 50 bis 200 mg KOH/g hat.

5. Pulverdispersionen nach einem der Ansprüche 1 bis 4, **dadurch gekennzeichnet, dass** das (Meth)Acrylatcopolymerisat (A1) eine Säurezahl von 5 bis 60 mg KOH/g hat.

6. Pulverdlspersionen nach einem der Ansprüche 1 bis 5, **dadurch gekennzeichnet, dass** das (Math)Acrylatcopolymerisat (A1) durch zweistufige Copolymerisation hergestellt worden ist.

7. Pulverdispersionen nach einem der Ansprüche 1 bis 6, **dadurch gekennzeichnet, dass** das Monomer (a11) aus der Gruppe, bestehend aus Hydroxyalkyl- und Hydroxycycloalkylester der Acrylsäure und Methacrylsäure und Umsetzungsprodukten aus Acrylsäure und Methacrylsäure mit dem Glycidylester einer in alpha-Stellung verzweigten Monocarbonsäure mit 5 bis 18 Kohlenstoffatomen In Molekül, ausgewählt sind.

8. Pulverdispersionen nach einem der Ansprüche 1 bis 6, **dadurch gekennzeichnet, dass** das Monomer (a12) aus der Gruppe, bestehend aus Acrylsäure, Methacrylsäure, Ethacrylsäure, Crotonsäure, Maleinsäure, Fumarsäure, Itaconsäure, olefinisch ungesättigten aromatischen Carbonsäuren, olefinisch ungesättigten Estern von Polycarbonsäuren, olefinisch ungesättigten Sulfonsäuren, olefinisch ungesättigten Phosphonsäuren, olefinisch ungesättigten, sauren Phosphorsäureestem sowie olefinisch ungesättigten, sauren Schwefelsäureestem, ausgewählt ist.

9. Pulverdispersionen nach Anspruch 8, **dadurch gekennzeichnet, dass** das Monomer (a12) aus der Gruppe, bestehend aus Acrylsäure und Methacrylsäure, ausgewählt ist.

10. Pulverdispersionen nach Anspruch 9, **dadurch gekennzeichnet, dass** In mindestens einer Stufe (1) mindestens ein von den Monomeren (a11) und (a12) verschiedenes, olefinisch ungesättigtes Monomer (a13) copolymerisiert worden ist.

11. Pulverdispersionen nach Anspruch 10, **dadurch gekennzeichnet, dass** das Monomer (a13) aus der Gruppe, bestehend aus Alkyl-, Cycloalkyl- und Arylestern olefinisch ungesättigter Säuren, Vinylgruppen enthaltenden Verbindungen, Allylgruppen enthaltenden Verbindungen und Nitrilen, die mit mindestens einer Gruppe, ausgewählt aus der Gruppe, bestehend aus Inerten funktionellen Gruppen und reaktiven funktionellen Gruppen, substituiert sein können, ausgewählt Ist.

12. Pulverdisperslonen nach einem der Ansprüche 1 bis 11, **dadurch gekennzeichnet, dass** In mindestens einer Stufe (1) mindestens 55% des oder der eingesetzten Monomeren (a11) copolymerisiert worden sind.

13. Pulverdispersionen nach einem der Ansprüche 1 bis 12, **dadurch gekennzeichnet, dass** in mindestens einer Stufe (1) höchstens 20% des oder der eingesetzten Monomeren (a12) copolymerisiert worden sind.

14. Pulverdispersionen nach einem der Ansprüche 1 bis 13, **dadurch gekennzeichnet, dass** in mindestens einer weiteren Stufe (2) mindestens 80% des oder der eingesetzten Monomeren (a12) copolymerisiert worden sind.

15. Pulverdispersionen nach einem der Ansprüche 1 bis 14, **dadurch gekennzeichnet, dass** in mindestens einer weiteren Stufe höchstens 45% des oder der eingesetzten Monomeren (a12) copolymerisiert worden sind.

16. Pulverdispersionen nach einem der Ansprüche 1 bis 15, **dadurch gekennzeichnet, dass** sie thermisch härtbar sind.

17. Pulverdispersionen nach einem der Ansprüche 1 bis 16, **dadurch gekennzeichnet, dass** sie noch mindestens einen Zusatzstoff (A2) enthalten.

18. Pulverdispersionen nach Anspruch 17, **dadurch gekennzeichnet, dass** der Zusatzstoff (A2), ausgewählt wird aus der Gruppe, bestehend aus rückstandsfrei oder Im Wesentlichen rückstandsfrei thermisch zersetzbaren Salzen; von den Bindemitteln (A1) verschiedenen physikalisch, thermisch und/oder mit aktinischer Strahlung härtbaren Bindemitteln; Vemetzungsmltteln für die thermische Härtung; Neutralisationsmitteln; thermisch härtbaren Reaktivverdünnern; mit aktinischer Strahlung härtbaren Reaktivverdünnern; opaken und transparenten, farb- und/oder effektgebenden Pigmenten; molekulardispers löslichen Farbstoffen; opaken und transparenten Füllstoffen; Nanopartikeln; Lichtschutzmitteln; Antioxidantien; Entlüftungsmitteln; Slipadditiven; Polymerisationsinhibitoren; Photoinitiatoren; thermolabilen radikalischen Initiatoren; Haftvermittlern; Verlaufmitteln; filmbildenden Hilfsmitteln; Verdicker und strukturviskose Sag control agents (SCA); Netzmitteln und Emulgatoren; Flammschutzmitteln; Korrosionsinhibitoren; Rieselhilfen; Wachsen; Sikkativen; Bioziden und Mattierungsmitteln.

19. Verfahren zur Herstellung der von organischen Lösemitteln im Wesentlichen oder völlig freien, strukturviskosen, härtbaren, wässrigen Pulverdispersionen gemäß einem der Ansprüche 1 bis 18, **dadurch gekennzeichnet, dass** man die dimensionsstabilen Partikel (A) in einem wässrigen Medium (B) dispergiert.

20. Verfahren nach Anspruch 19, **dadurch gekennzeichnet, dass** man die dimensionastabilen Partikel (A) in einem wässrigen Medium (B) durch ein Sekundärdispersionsverfahren dispergiert, bei dem man
- die Bindemittel (A1) sowie gegebenenfalls die Zusatzstoffe (A2) in organischen Lösemitteln löst,
- die resultirenden Lösungen mit Hilfe von Neutralisationmitteln (A2) in Wasser dispergiert,
- die resulerende Dispersion mit Wasser verdünnt, wodurch sich zunächst eine Wasser-in-Öl-Emulsion ausbildet, die bei weiterer Verdünnung In eine Öl-In-Wasser-Emulsion umschlägt, und
- die organischen Lösemittel aus der Öl-in-Wasser-Emulsion entfernt.

21. Verwendung der von organischen Lösemitteln im Wesentlichen oder völlig freien, strukturviskosen, härtbaren, wässrigen Pulverdispersionen gemäß einem der Ansprüche 1 bis 18 und der nach dem Verfahren gemäß Anspruch 19 oder 20 hergestellten, von organischen Lösermitteln Im Wesentlichen oder völlig freien, strukturviskosen, härtbaren, wässrigen Pulverdispersionen zur Herstellung von thermoplastischen und duroplastischen Materialien.

22. Verwendung nach Anspruch 21, **dadurch gekennzeichnet, dass** die thermoplastischen und duroplastischen Materiallen Beschichtungen, Klebschichten und Dichtungen sowie Formteilen und Folien sind.

23. Verwendung nach Anspruch 22, **dadurch gekennzeichnet, dass** die Beschichtungsstoffe als Primer, Grundierungen, Füller, Basislacke, Unidecklacke und Klarlack zur Herstellung ein- oder mehrschichtiger Primer-Lacklerungen, Korroslonsschutzschlchten, Steinschlagschutzgrundierungen, Füllerlackierungen, Basislacklerungen, Unldecklacklerungen und Klarlacklerungen verwendet werden.

24. Verwendung nach Anspruch 23, **dadurch gekennzeichnet, dass** die Klarlacke der Herstellung ein- oder mehrschichtiger Klarlackierungen Im Rahmen farb- und/oder effektgebender Mehrschirhterklerungen dienen.

25. Verwendung nach Anspruch 24, **dadurch gekennzeichnet, dass** die farb- und/oder effektgebenden Mehrschlchtlacklerungen mit Hilfe von Nass-In-nass-Verfahren hergestellt werden.

## Claims

1. Structurally viscous, curable, aqueous powder dispersions free entirely or substantially from organic solvents, comprising in an aqueous medium (B) as disperse phase solid and/or highly viscous particles (A) which are dimensionally stable under storage and application conditions and have an average particle size as measured by the laser diffraction method of D (v, 0.5) = 1 to 10 µm, the dimensionally stable particles (A) comprising as binder 10% to 100% by weight of at least one (meth)acrylate copolymer (A1) having an OH number of 40 to 250 g KOH/g and an acid number of 5 to 100 mg KOH/g, the (meth)acrylate copolymer (A1) having been prepared by multistage copolymerization
(a11) of at least one acrylate and/or methacrylate monomer containing at least one hydroxyl group and
(a12) at least one olefinically unsaturated monomer containing at least one acid group
in organic solution, where
(1) in at least one stage
(1.1) the entirety or predominant fraction of the monomer or monomers (a11) used or
(1.2) the entirety or predominant fraction of the monomer or monomers (a11) used, together with a small fraction of the monomer or monomers (a12) used, have been completely or almost completely (co)polymerized, before
(2) in at least one further stage
(2.1) the entirety or predominant fraction of the monomer or monomers (a12) used or
(2.2) the entirety or predominant fraction of the monomer or monomers (a12) used, together with the remainder of the monomer or monomers (a11) used, have been (co)polymerized.

2. Powder dispersions according to Claim 1, **characterized in that** the dimensionally stable particles (A) have a monomodal particle size distribution, as measured by the laser diffraction method, which is as follows:
- D (v, 0.1) = 0.8 to 1.2 µm;
- D (v, 0.5) = 1.5 to 2.5 µm;
- D (v, 0.9) = 2.5 to 3.6 µm and
- span = {[D (v, 0.9)] - [D (v, 0.1)]}/[D (v, 0.5)] = 0.8 to 1.5.

3. Powder dispersions according to Claim 1 or 2, **characterized in that** the dimensionally stable particles (A) contain 20% to 90% by weight of at least one (meth)acrylate copolymer (A1).

4. Powder dispersions according to any one of Claims 1 to 3, **characterized in that** the (meth)acrylate copolymer (A1) has an OH number of 50 to 200 mg KOH/g.

5. Powder dispersions according to any one of Claims 1 to 4, **characterized in that** the (meth)acrylate copolymer (A1) has an acid number of 5 to 60 mg KOH/g.

6. Powder dispersions according to any one of Claims 1 to 5, **characterized in that** the (meth)acrylate copolymer (A1) has been prepared by two-stage copolymerization.

7. Powder dispersions according to any one of Claims 1 to 6, **characterized in that** the monomer (a11) is selected from the group consisting of hydroxyalkyl and hydroxycycloalkyl esters of acrylic acid and methacrylic acid, and reaction products of acrylic acid and methacrylic acid with the glycidyl ester of an alpha-branched monocarboxylic acid having 5 to 18 carbon atoms in the molecule.

8. Powder dispersions according to any one of Claims 1 to 6, **characterized in that** the monomer (a12) is selected from the group consisting of acrylic acid, methacrylic acid, ethacrylic acid, crotonic acid, maleic acid, fumaric acid, itaconic acid, olefinically unsaturated aromatic carboxylic acids, olefinically unsaturated esters of polycarboxylic acids, olefinically unsaturated sulfonic acids, olefinically unsaturated phosphonic acids, olefinically unsaturated, acidic phosphoric esters and olefinically unsaturated acidic sulfuric esters.

9. Powder dispersions according to Claim 8, **characterized in that** the monomer (a12) is selected from the group consisting of acrylic acid and methacrylic acid.

10. Powder dispersions according to Claim 9, **characterized in that** in at least one stage (1) at least one olefinically unsaturated monomer (a13), different from the monomers (a11) and (a12), has been copolymerized.

11. Powder dispersions according to Claim 10, **characterized in that** the monomer (a13) is selected from the group consisting of alkyl, cycloalkyl, and aryl esters of olefinically unsaturated acids, vinyl-functional compounds, allyl-functional compounds, and nitriles, which may be substituted by at least one group selected from the group consisting of inert functional groups and reactive functional groups.

12. Powder dispersions according to any one of Claims 1 to 11, **characterized in that** in at least one stage (1) at least 55% of the monomer or monomers (a11) employed have been copolymerized.

13. Powder dispersions according to any one of Claims 1 to 12, **characterized in that** in at least one stage (1) not more than 20% of the monomer or monomers (a12) employed have been copolymerized.

14. Powder dispersions according to any one of Claims 1 to 13, **characterized in that** in at least one further stage (2) at least 80% of the monomer or monomers (a12) employed have been copolymerized.

15. Powder dispersions according to any one of Claims 1 to 14, **characterized in that** in at least one further stage not more than 45% of the monomer or monomers (a12) employed have been copolymerized.

16. Powder dispersions according to any one of Claims 1 to 15, **characterized in that** they further comprise thermally curable.

17. Powder dispersions according to any one of Claims 1 to 16, **characterized in that** they further comprise at least one additive (A2).

18. Powder dispersions according to Claim 17, **characterized in that** the additive (A2) is selected from the group consisting of salts which can be thermally decomposed without residue or substantially without residue; binders different from the binders (A1) and curable physically, thermally and/or with actinic radiation; crosslinking agents for the thermal cure; neutralizing agents; thermally curable reactive diluents; reactive diluents curable with actinic radiation; opaque and transparent, color and/or effect pigments; molecularly dispersely soluble dyes; opaque and transparent fillers; nanoparticles; light stabilizers; antioxidants; devolatilizers; slip additives; polymerization inhibitors; photoinitiators; thermolabile free-radical initiators; adhesion promoters; flow control agents; film-forming assistants; thickeners and structurally viscous sag control agents, SCAs; wetting agents and emulsifiers; flame retardants; corrosion inhibitors; free-flow aids; waxes; siccatives; biocides; and matting agents.

19. Process for preparing the structurally viscous, curable, aqueous powder dispersions free entirely or substantially from organic solvents, according to any one of Claims 1 to 18, **characterized in that** the dimensionally stable particles (A) are dispersed in an aqueous medium (B).

20. Process according to Claim 19, **characterized in that** the dimensionally stable particles (A) are dispersed in an aqueous medium (B) by means of a secondary dispersion process in which
- the binders (A1) and, if desired, the additives (A2) are dissolved in organic solvents,
- the resulting solutions are dispersed in water, using neutralizing agents (A2),
- the resulting dispersion is diluted with water, forming first a water-in-oil emulsion which on further dilution undergoes inversion to give an oil-in-water emulsion, and
- the organic solvents are removed from the oil-in-water emulsion.

21. Use of the structurally viscous, curable, aqueous powder dispersions free entirely or substantially from organic solvents, according to any one of Claims 1 to 18, and of the structurally viscous, curable, aqueous powder dispersions free entirely or substantially from organic solvents and produced by the process according to Claim 19 or 20, for producing thermoplastic and thermoset materials.

22. Use according to Claim 21, **characterized in that** the thermoplastic and thermoset materials are coatings, adhesive layers, seals, moldings and sheets.

23. Use according to Claim 22, **characterized in that** the coating materials are used as primers, priming materials, surfacers, basecoat, solid-color topcoat and clearcoat materials for producing single-coat or multicoat primer coatings, corrosion control coats, antistonechip priming coats, surfacer coats, basecoats, solid-color topcoats and clearcoats.

24. Use according to Claim 23, **characterized in that** the clearcoat materials serve for producing single-coat or multicoat clearcoats as part of multicoat color and/or effect paint systems.

25. Use according to Claim 24, **characterized in that** the multicoat color and/or effect paint systems are produced by means of wet-on-wet techniques.

## Revendications

1. Dispersions de poudre, essentiellement ou complètement exemptes de solvants organiques, présentant une viscosité de structure, durcissables, aqueuses, contenant, dans un milieu aqueux (B), comme phase dispersée, des particules (A) solides et/ou hautement visqueuses, de dimensions stables dans les conditions d'entreposage et d'utilisation présentant une grosseur moyenne des particules mesurée par le procédé de diffraction au laser D (v, 0,5) = 1 à 10 µm, où les particules (A) de dimensions stables contiennent, comme liant, 10 à 100% en poids d'au moins un copolymère de (méth)acrylate (A1) présentant un indice OH de 40 à 250 mg de KOH/g et un indice d'acide de 5 à 100 mg de KOH/g et où le copolymère de (méth)acrylate (A1) a été préparé par une copolymérisation en plusieurs étapes
(a11) d'au moins un monomère d'acrylate et/ou de méthacrylate contenant au moins un groupe hydroxyle et
(a12) d'au moins un monomère oléfiniquement insaturé contenant au moins un groupe acide
en solution organique, où
(1) dans au moins une étape, on (co)polymérise de manière complète ou quasiment complète
(1.1) la quantité totale ou la proportion principale du ou des monomères (a11) utilisés ou
(1.2) la quantité totale ou la proportion principale du ou des monomères (a11) utilisés avec une faible proportion du ou des monomères (a12) utilisés avant que
(2) dans au moins une autre étape, on (co)polymérise
(2.1) la quantité totale ou la proportion principale du ou des monomères (a12) utilisés ou
(2.2) la quantité totale ou la proportion principale du ou des monomères (a12) utilisés avec la quantité résiduelle du ou des monomères (a11) utilisés.

2. Dispersions de poudre selon la revendication 1, **caractérisées en ce que** les particules (A) de dimensions stables présentent une distribution monomodale des grosseurs des particules mesurée par le procédé de diffraction au laser :
- D (v, 0,1) = 0,8 à 1,2 µm ;
- D (v, 0,5) = 1,5 à 2,5 µm ;
- D (v, 0,9) = 2,5 à 3,6 µm et
- Ecart = {[D (v, 0,9)] - [D (v, 0,1)]}/[D (v, 0,5)] = 0,8 à 1,5.

3. Dispersions de poudre selon la revendication 1 ou 2, **caractérisées en ce que** les particules (A) de dimensions stables contiennent 20 à 90% en poids d'au moins un copolymère (A1) de (méth)acrylate.

4. Dispersions de poudre selon l'une quelconque des revendications 1 à 3, **caractérisées en ce que** le copolymère (A1) de (méth)acrylate présente un indice OH de 50 à 200 mg de KOH/g.

5. Dispersions de poudre selon l'une quelconque des revendications 1 à 4, **caractérisées en ce que** le copolymère (A1) de (méth)acrylate présente un indice d'acide de 5 à 60 mg de KOH/g.

6. Dispersions de poudre selon l'une quelconque des revendications 1 à 5, **caractérisées en ce que** le copolymère (A1) de (méth)acrylate a été préparé par copolymérisation en deux étapes.

7. Dispersions de poudre selon l'une quelconque des revendications 1 à 6, **caractérisées en ce que** le monomère (a11) est choisi dans le groupe constitué par les esters hydroxyalkyliques et hydroxycycloalkyliques de l'acide acrylique et méthacrylique et les produits de transformation de l'acide acrylique et méthacrylique avec l'ester glycidylique d'un acide monocarboxylique ramifié en position alpha comprenant 5 à 18 atomes de carbone dans la molécule.

8. Dispersions de poudre selon l'une quelconque des revendications 1 à 6, **caractérisées en ce que** le monomère (a12) est choisi dans le groupe constitué par l'acide acrylique, méthacrylique, éthacrylique, crotonique, maléique, fumarique, itaconique, les acides carboxyliques aromatiques oléfiniquement insaturés, les esters oléfiniquement insaturés d'acides polycarboxyliques, les acides sulfoniques oléfiniquement insaturés, les acides phosphoniques oléfiniquement insaturés, les esters acides d'acide phosphorique oléfiniquement insaturés ainsi que les esters acides d'acide sulfurique oléfiniquement insaturés.

9. Dispersions de poudre selon la revendication 8, **caractérisées en ce que** le monomère (a12) est choisi dans le groupe constitué par l'acide acrylique et méthacrylique.

10. Dispersions de poudre selon la revendication 9, **caractérisées en ce que** dans au moins une étape (1), au moins un monomère (a13) oléfiniquement insaturé, différent des monomères (a11) et (a12), a été copolymérisé.

11. Dispersions de poudre selon la revendication 10, **caractérisées en ce que** le monomère (a13) est choisi dans le groupe constitué par les esters alkyliques, cycloalkyliques et aryliques d'acides oléfiniquement insaturés, les composés contenant des groupes vinyle, les composés contenant des groupes allyle et les nitriles qui peuvent être substitués par au moins un groupe, choisi dans le groupe constitué par les groupes fonctionnels inertes et les groupes fonctionnels réactifs.

12. Dispersions de poudre selon l'une quelconque des revendications 1 à 11, **caractérisées en ce que** dans au moins une étape (1) au moins 55% du ou des monomères (a11) utilisés ont été copolymérisés.

13. Dispersions de poudre selon l'une quelconque des revendications 1 à 12, **caractérisées en ce que** dans au moins une étape (1) au plus 20% du ou des monomères (a12) utilisés ont été copolymérisés.

14. Dispersions de poudre selon l'une quelconque des revendications 1 à 13, **caractérisées en ce que** dans au moins une autre étape (2) au moins 80% du ou des monomères (a12) utilisés ont été copolymérisés.

15. Dispersions de poudre selon l'une quelconque des revendications 1 à 14, **caractérisées en ce que** dans au moins une autre étape au plus 45% du ou des monomères (a12) utilisés ont été copolymérisés.

16. Dispersions de poudre selon l'une quelconque des revendications 1 à 15, **caractérisées en ce qu'**elles sont thermodurcissables.

17. Dispersions de poudre selon l'une quelconque des revendications 1 à 16, **caractérisées en ce qu'**elles contiennent encore au moins un additif (A2).

18. Dispersions de poudre selon la revendication 17, **caractérisées en ce que** l'additif (A2) est choisi dans le groupe constitué par les sels thermiquement décomposables sans résidus ou essentiellement sans résidus ; les liants durcissables physiquement, thermiquement et/ou par un rayonnement actinique, différents des liants (A1) ; les réticulants pour le thermodurcissement ; les agents de neutralisation ; les diluants réactifs thermodurcissables ; les diluants réactifs durcissables par un rayonnement actinique ; les pigments opaques et transparents, conférant une teinte et/ou un effet ; les colorants solubles à dispersion moléculaire ; les charges opaques et transparentes ; les nanoparticules ; les agents de protection contre la lumière ; les antioxydants ; les agents de désaération ; les lubrifiants ; les inhibiteurs de polymérisation ; les photo-initiateurs ; les initiateurs radicalaires thermolabiles ; les promoteurs d'adhérence ; les agents d'étalement ; les adjuvants filmogènes ; les épaississants et les agents de contrôle de festons à viscosité de structure (sag control agent - SCA) ; les mouillants et les émulsifiants ; les agents ignifuges ; les inhibiteurs de corrosion ; les adjuvants d'écoulement ; les cires ; les dessiccateurs ; les biocides et les agents de matage.

19. Procédé pour la préparation de dispersions de poudre essentiellement ou totalement exemptes de solvants organiques, à viscosité de structure, durcissables, aqueuses, selon l'une quelconque des revendications 1 à 18, **caractérisé en ce qu'**on disperse les particules (A) de dimensions stables dans un milieu aqueux (B).

20. Procédé selon la revendication 19, **caractérisé en ce qu'**on disperse les particules (A) de dimensions stables dans un milieu aqueux (B) par un procédé de dispersion secondaire **en ce qu'**on
- dissout le liant (A1) ainsi que le cas échéant les additifs (A2) dans des solvants organiques,
- disperse les solutions obtenues à l'aide d'agents de neutralisation (A2) dans l'eau,
- dilue la dispersion obtenue avec de l'eau, suite à quoi il se forme d'abord une émulsion eau-dans-huile, qui se transforme lors d'une dilution ultérieure en émulsion huile-dans-eau, et
- élimine les solvants organiques de l'émulsion huile-dans-eau.

21. Utilisation des dispersions de poudre essentiellement ou totalement exemptes de solvants organiques, à viscosité de structure, durcissables, aqueuses, selon l'une quelconque des revendications 1 à 18 et des dispersions de poudre essentiellement ou totalement exemptes de solvants organiques, à viscosité de structure, durcissables, aqueuses, préparées selon le procédé selon la revendication 19 ou 20 pour la préparation de matériaux thermoplastiques et thermodurcissables.

22. Utilisation selon la revendication 21, **caractérisée en ce que** les matériaux thermoplastiques et thermodurcissables sont des revêtements, des couches adhésives et des joints ainsi que des pièces moulées et des feuilles.

23. Utilisation selon la revendication 22, **caractérisée en ce que** les substances de revêtement sont utilisées comme apprêts, couches de fond, charges, laques de base, laques de recouvrement uniformes et laques claires pour la réalisation de laquages d'apprêt, de couches de protection contre la corrosion, de couches de fond de protection contre les impacts par les grenailles, de laquages chargés, de laquages de base, de laquages de recouvrement uniformes et de laquages clairs, à une ou plusieurs couches.

24. Utilisation selon la revendication 23, **caractérisée en ce que** les laques claires servent à la réalisation de laquages clairs à une ou plusieurs couches dans le cadre des laquages à plusieurs couches conférant une teinte et/ou un effet.

25. Utilisation selon la revendication 24, **caractérisée en ce que** les laquages à plusieurs couches conférant une teinte et/ou un effet sont préparés à l'aide du procédé humide-sur-humide.
